# EUROPEAN PATENT APPLICATION

(11) **EP 4 597 889 A1**
(43) Date of publication of application: **06.08.2025**
(21) Application number: 24155011.0
(22) Date of filing: 31.01.2024
(51) Int. Cl.: H04L 1/1607

(54) **ALIGNED FRAME STRUCTURE FOR HARQ**

(71) Applicant: Vestel Elektronik Sanayi ve Ticaret A.S., 45030 Manisa (TR)
(72) Inventor: ABIDRABBU, Shaima, 34810 Istanbul (TR); ARSLAN, Hüseyin, 34810 Istanbul (TR)
(74) Representative: Grünecker Patent- und Rechtsanwälte PartG mbB

(57) **Abstract**

The present disclosure provides methods and apparatuses for receiving and transmitting data over a wireless interface. A data unit is transmitted and/or received split into a plurality of parts. The parts may be used as redundancy versions that are transmitted if retransmission is necessary. In particular, each part is segmented into an integer number of MPDUs and the MPDUs are segmented into FEC units that become codewords after FEC encoding. If the transmission of the entire data unit is not successful, the redundancy versions corresponding to the parts are transmitted in a predefined order. Alternatively, those redundancy versions may be transmitted which were identified as erroneous (not successfully decodable).

## Description

The present disclosure relates generally to wireless communication, and in particular to a hybrid automatic repeat request (HARQ) protocol. The present disclosure relates to HARQ transmitter and receiver, as well as HARQ transmitting and receiving methods.

### BACKGROUND

Automatic repeat request (ARQ) schemes, and in particular hybrid-ARQ (HARQ) schemes, which jointly adopt forward error correction (FEC) and ARQ, have been used to provide reliable data transmission in wireless communications systems. On the other hand, the feedback from the receiver to the transmitter and the retransmission process used in ARQ may incur some costs in terms of power efficiency, throughput, computational power (complexity), and end-to-end delay. Due to noise, interference, channel fading, and other impairments, data transferred between two communicating entities are prone to errors. Therefore, the underlying communications protocols should be designed to correct data errors to support a particular Quality of Service (QoS) class Packet Error Rate (PER). In general, wireless communications systems may utilize various protocols at different layers to correct data errors at the receiver. At the physical layer, error detection and/or correction are usually performed using FEC coding. At the radio link and the transport layers, error correction usually relies on retransmission-based methods such as ARQ. Also, at the application layer, retransmission methods can be applied to recover some lost or corrupted packets. Adopting one or more of the aforementioned methods depends on the system resources and the QoS requirements. Nevertheless, FEC and ARQ are essential building blocks for most popular standards including the fourth generation (4G) wireless standards, 5G, wireless fidelity (Wi-Fi, e.g. IEEE 802.11 based systems), and narrowband (NB)-loT.

There have been attempts to alleviate or reduce some of the above-mentioned costs of FEC and ARQ and to integrate the FEC and the ARQ efficiently into the layer processing structure including further functions. Such integration may be a challenging task.

### SUMMARY

Methods and techniques are described herein for facilitating transmission and reception of wireless signals using a HARQ which may lead to a more efficient processing at the transmitter and/or at the receiver side.

The invention is defined by the independent claims. Some exemplary implementations are provided by the dependent claims.

For example, a transmitting method is provided, for transmitting data over a wireless interface. The method comprises obtaining a data unit; splitting said data unit into a plurality of parts; transmitting processing to obtain a plurality of codewords; and transmitting the codewords. The transmission processing is applied to each of the plurality of parts which include a first part. The transmission processing includes (i) first segmenting of said first part out of the plurality of parts into an integer number of Medium Access Control, MAC, protocol data units, MPDUs; (ii) second segmenting the integer number of PDUs into an integer number of forward error correction, FEC, units; and (iii) encoding, with a FEC coding, each of said integer number of FEC units into one or more codewords. The method further comprises upon receiving a negative acknowledgement indication for said first part according to an automatic repeat request, ARQ, protocol, retransmitting said first part including said transmission processing.

The corresponding receiving method and apparatuses for transmitting and receiving are provided as well as disclosed below.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating a communication system with a transmitter and a receiver.
- FIG. 2: is a block diagram illustrating a communication system architecture using infrastructure and involving communication between a base station and a user equipment.
- FIG. 3: is a block diagram illustrating exemplary parts of a communication system processing chain at a data source and at a data destination.
- FIG. 4: is a schematic drawing illustrating processing of an (A)-MSDU by MAC layer and the physical layer.
- FIG. 5: is a schematic drawing illustrating a general incremental redundancy combining.
- FIG. 6: is a schematic drawing illustrating a HARQ protocol with first full-rate transmission and retransmissions including predefined parts of the first transmission.
- FIG. 7: is a block diagram illustrating functional units of an exemplary transmitter.
- FIG. 8: is a schematic drawing illustrating an exemplary message exchange involved in a HARQ process of retransmissions.
- FIG. 9: is a schematic drawing illustrating an aligned splitting approach in different protocol layers.
- FIG. 10: is a schematic drawing of an exemplary HARQ retransmission procedure.
- FIG. 11: is a schematic drawing illustrating an exemplary aligned splitting.
- FIG. 12: is a schematic drawing illustrating frame structure for the initial transmission.
- FIG. 13: is a schematic drawing illustrating frame structure for first retransmission.
- FIG. 14: is a schematic drawing illustrating frame structure for the second retransmission.
- FIG. 15: is a schematic drawing illustrating frame structure for the third retransmission.
- FIG. 16: is a schematic drawing illustrating a receiver side combining approach.
- FIG. 17: is a flow diagram illustrating a method performed at a transmitter;
- FIG. 18: is a flow diagram illustrating a method performed at a receiver;
- FIG. 19: is a block diagram illustrating functional modules of an exemplary transmitter and/or receiver device;
- FIG. 20: is a block diagram illustrating functional modules of a storage storing a program to be executed on processing circuitry of Fig. 19 to perform methods auch as those of Figs. 17 and 18.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### Communication system

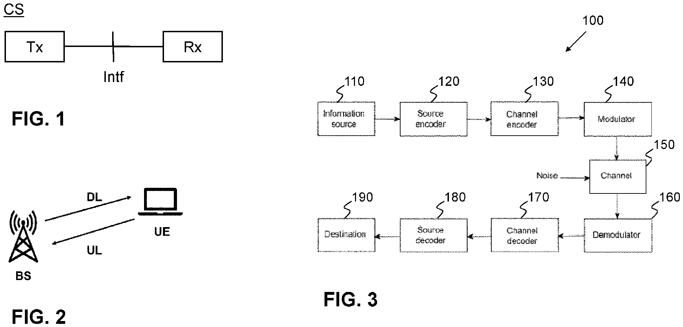

**Fig. 1** illustrates an exemplary communication system CS in which Tx represents a transmitter and Rx represents a receiver. The transmitter Tx is capable of transmitting a signal to the receiver Rx over an interface Intf. The interface Intf may be, for instance, a wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface Intf implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11be or the like.

**Fig. 2** shows an exemplary wireless communication system such as an IEEE 802.11 based system or a 3GPP system such as 4G/5G or the like employing infrastructure. Such system includes a base station BS and a user equipment UE. The BS can be an access point (AP) of the IEEE 802.11 based system or a NodeB of the 3GPP system, such as an eNB of the 4G (LTE) or gNB of the 5G (NR). The UE may be any device such as mobile phone, laptop or tablet with the access to the wireless system, or even loT machine-type devices or the like. The term UE is used mainly in the context of the 3GPP standards. However, in this disclosure, this term is also used for general user equipment in any system such as e.g. a STA in the IEEE 802.11 based systems. The present disclosure is not limited to any particular implementation of the BS and the UE. As illustrated in Fig. 2, the communication between the BS and the UE may include downlink (DL) and uplink (UL). The DL communication is from the BS to the UE. Accordingly, in this case, the BS corresponds to the transmitter Tx of Fig. 1 and the UE corresponds to the receiver Rx of Fig. 1. The UL communication is from the UE to the BS. Accordingly, in this case, the UE corresponds to the transmitter Tx of Fig. 1 and the BS corresponds to the receiver Rx of Fig. 1. The present disclosure is not limited to the infrastructure based communication and may be employed also in device to device communications (e.g. between two UEs or STAs), at sidelink.

For example, the base station BS transmits the relevant data to the user equipment UE as a downlink transmission, and the UE provides the necessary feedback to the BS in the uplink direction to adjust the reliability level of the received data and to request retransmission in case the reliability level does not match requirements of the user.

A more detailed, yet still a simplified block diagram of a digital communication system 100 is depicted in **Fig. 3****.** Blocks 110-140 belong to a transmitter side and may be implemented by the transmitter Tx of Fig. 1. Blocks 160-190 belong to a receiver side and may be implemented by the receiver Rx of Fig. 1. The transmitter and the receiver communicate with each other via a channel 150, which may add to the signal transmitted by the transmitter some noise. Information source 110 provides source data to be communicated to the receiving side. This may be raw data such as sensor data that may be e.g. AM audio signal, a video signal, image signal, text, measurement value(s) or the like. The source data may be compressed by the source encoder 120. The source encoder 120 may perform compression of the source data, such as lossy or lossless compression. The possibly compressed data are then passed to the channel encoder 130 that may perform various techniques such as FEC and ARQ or the like which facilitate robust transmission over the noisy channel 150. The channel coded data may then be modulated in a modulator 140 and transmitted over the channel 150, e.g. via one or more antennas. It is noted that the information source and the source encoder are typically not part of a communication system such as wireless communication interface. They are usually performed on the application layer and passed to the communication interface for transmission.

Correspondingly, the receiver side includes a demodulator 160 that demodulates the received signal (received e.g. over one or more antennas) and a channel decoder 170 which applies FEC decoding and/or implements receiver-side ARQ protocol and/or possibly other techniques. The source decoder 180 then de-compresses the source data, which are then used at the destination 190, e.g. displayed, used in further processing, played via loudspeaker, or the like.

Channel coding 130 is performed on data, that are typically referred to as information data (or information bits if the data is coded in units of bits rather than symbols), in such a way as to mitigate the negative effects of noise and interference incurred in the communications channel 150. This is achieved by FEC by adding redundancy, where some extra bits are included into the data to be transmitted in addition to the information bits for future error correction or error detection 170 at the receiver side. The capability of the demodulator 160 to restore the transmitted signals may be hampered by different channel factors including noise, interference, Doppler shift, multipath fading, etc. These factors result in demodulation errors and may hinder reliable communication. The purpose of a channel encoder 130 is, therefore, to facilitate a way to combat these errors caused by unfavorable channel conditions. Today's error correction codes can be generally classified into two major categories: (i) block codes and (ii) convolutional codes, where both can be used by HARQ.

### Layer structure in WiFi

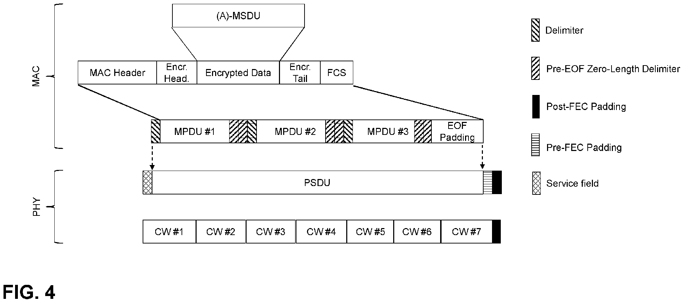

**Fig. 4** illustrates an exemplary frame format on physical layer and MAC, compliant with some IEEE 802.11 versions. In particular, a MAC Service Data Unit (MSDU) which may be an aggregated (A)-MSDU is received from a higher layer (layer above MAC) in the transmitter side processing stack. MAC layer processes the (A)-MSDU to obtain one or more MPDUs, which results in adding MAC layer overhead. In this example, the overhead includes the MAC Header and Frame Check Sequence (FCS). The FCS may be a CRC or the like for detecting whether or not the MPDU contains an error at the receiver. In this example, the data of the (A)-MSDU are encrypted, resulting in encrypted data, and additional overhead of encryption header and encryption tail. However, it is noted that in general, the encryption does not have to be performed on MAC layer and that the overhead structure may look differently. For the purpose of the present disclosure, the particular content of the overhead is immaterial. One or more such MPDUs may then be concatenated and provided to the physical layer for further processing. As can be seen in Fig. 4, the concatenation may involve further overhead such as various delimiters that serve as separation between the MPDUs and some padding, such as the end of the frame (EOF) padding shown herein.

The physical layer receives the frame with concatenated three MPDUs padded to match the desired frame size constraint (e.g. multiples of bytes or the like) as the physical layer SDU (PSDU). The physical layer processes the PSDU further e.g. by applying FEC coding and adding some more overhead. The overhead may include the FEC redundancy and the some further control elements such as a service field shown in Fig. 4 and post- and/or pre- FEC padding if necessary (e.g. to match the physical layer frame size or constraints and/or to match the input size of the FEC encoder.). After applying the FEC coding to the PSDU, one or more codewords (CWs) are generated- in this example, seven CWs are shown.

As can be seen in Fig. 4, the boundaries between the MPDUs #1, #2, and #3 do not match the boundaries between the seven codewords CW#1-CW#7. In case of a retransmission of an MPDU, the added overhead may look differently from the overhead of the previous (e.g. initial) transmission. Moreover, the FEC coding would generate different codewords because of incremental redundancy, in order to provide a different redundancy version. Different MPDUs with different CWs between the multiple copies obtained by multiple transmissions that are collected on the UE side may cause the misalignment problem. In other words, the codewords of the initial transmission may not match the codewords of the retransmission(s). This may pose problems for combining on the physical layer at the receiver before applying the FEC decoding.

### Combining

A typical HARQ includes four main operations at the receiver side: (i) FEC decoding, (ii) error detection, (iii) combining, and, if necessary, (iv) retransmission.

FEC decoding uses the redundancy inserted at the FEC encoder and correlated with the information bits to correct some transmission errors. Error detection is typically performed by a cyclic redundancy code (CRC) that may be added to the encoded data before the transmission at the transmitter side and checked at the receiver side. Retransmissions are triggered in cases where even after the combining, the received data cannot be correctly decoded (still resulting in error detected by the CRC).

HARQ does not have to discard erroneous packets. They may be stored in a buffer and combined with retransmitted packets that may be received later. This is called HARQ with soft combining. Soft combining is an error correction technique in which the erroneous packets are not discarded but stored in a buffer. The basic idea is that two or more packets, received each with insufficient information, can be combined in such a way that the total signal can be decoded after all. In other words combines received data with their retransmission(s) to obtain a single, combined packet that is more reliable than its constituents. Decoding of the error-correction code operates on the combined signal. If the decoding fails (typically a CRC code is used to detect this event), a retransmission is requested. Retransmission in any HARQ scheme must, by definition, represent the same set of information bits as the original transmission. However, the set of coded bits transmitted in each retransmission may be selected differently as long as they represent the same set of information bits. HARQ with soft combining is therefore usually categorized into Chase combining also known as type 1 HARQ, and incremental redundancy (IR) also known as type 2 HARQ., depending on whether the retransmitted bits are required to be identical to the original transmission or not.

In the chase combining, if the channel quality is good, errors are detected and corrected. If the channel quality is bad, not all errors may be corrected, and the receiver asks for re-transmission (within an ARQ protocol) which is basically a repetition of the previously transmitted (encoded) data. In the chase combining, the retransmissions consist of the same set of coded bits as the original transmission. After each retransmission, the receiver uses e.g. a maximum-ratio combining to combine each received channel bit with any previous transmissions of the same bit, and the combined signal is fed to the decoder. As each retransmission is an identical copy of the original transmission (at least at the transmitter side), retransmissions with Chase combining can be seen as an additional repetition coding.

Therefore, as no new redundancy is transmitted, Chase combining does not give any additional coding gain but only increases the accumulated received Eb/NO for each retransmission.

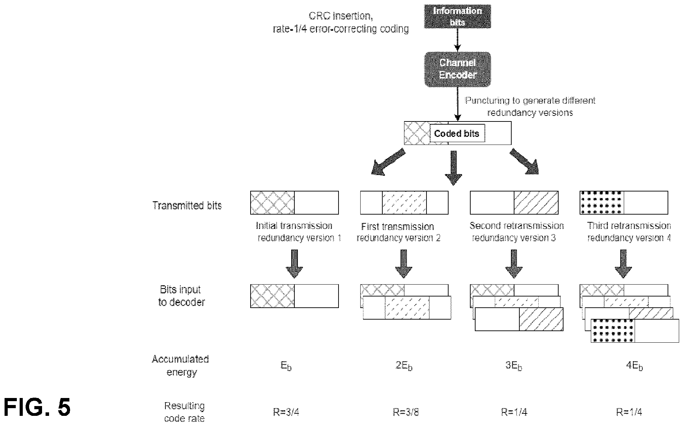

Incremental redundancy (IR) is shown in Fig. 5. In incremental redundancy combining approach, a different subset of data, a different subset of error detection, and a different subset of FEC may be sent on each re-transmission. For example, in the first transmission, a subset of information and the redundancy is sent. Re-transmissions are made with a different set of data, error detection, and/or FEC. IR transmits "increments" (different redundancy versions) of information and/or redundant bits after errors are observed at the receiver and a request for retransmission is fed back to the transmitter. In this way, the IR may adaptively change an effective data rate based on the results of actual transmissions. On the other hand, link adaptation (such as changing modulation and coding scheme) relies on channel estimation to determine a suitable rate, which may not be always a suitable choice when transmission occurs because of measurement errors or latency. Therefore, IR may achieve better aggregate throughput, possibly at the expense of extra delay and higher memory requirements in implementation.

Whenever retransmission is required, the retransmission typically uses a different set of coded bits than the previous transmission. The receiver combines the retransmission with previous transmission attempts of the same packet. As the retransmission may contain additional parity bits not included in the previous transmission attempts, the resulting code rate is generally lowered by retransmission. Furthermore, each retransmission does not necessarily have to consist of the same number of coded bits as the original and, in general, the modulation scheme can also be different for different retransmissions.

Typically, incremental redundancy is based on a low-rate code and the different redundancy versions are generated by puncturing the output of the encoder as is also illustrated in Fig. 5. In the first transmission, only a limited number of coded bits are transmitted, effectively leading to a high-rate code. In the retransmissions, additional coded bits are transmitted. As an example, let us assume a basic rate 1/4 code (1/4 information bits and 3/4 redundancy bits). In the first transmission, only every third coded bit is transmitted, effectively giving a rate of 3/4 code. In the case of a decoding error and a subsequent request for retransmission, additional bits are transmitted, effectively leading to a rate of e.g. 3/8 code. After the second retransmission the code rate may be 1/4 caused by transmission of further bits. In the case of more than two retransmissions, transmitted coded bits may be repeated - they may repeat again the bits transmitted in the initial transmission, then the bits transmitted by the first retransmission and then the bits of the second retransmission. However, such repetition is not necessary and another, different subset of bits may be transmitted. In addition to a gain in accumulated received Eb/N0, incremental redundancy also results in a coding gain for each retransmission. The gain with IR compared to chase combining is thus larger for high initial code rates, while at lower initial coding rates chase combining is almost as good as IR. It is noted that the performance gain of incremental redundancy compared to chase combining can also depend on the relative power difference between the transmission attempts or further factors.

### Pre-planned splitting of data

If IR HARQ is supported and HARQ with multiple redundancy versions (RV) is applied, different MPDUs with different CWs between the multiple copies at the receiver of the UE may lead to the above-mentioned misalignment problem. The misalignment may occur between different CWs and MPDUs for different copies of the same transmitted packet.

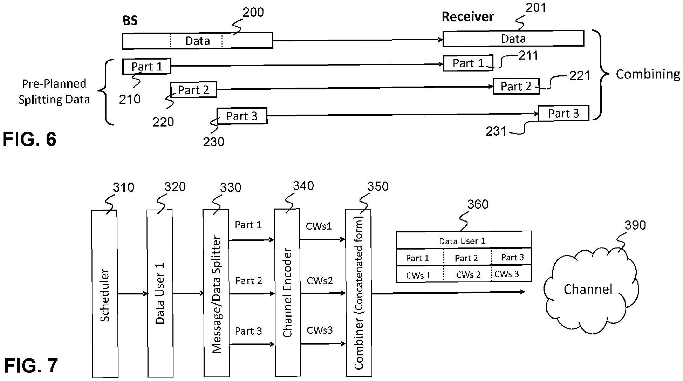

In the present disclosure, a new HARQ unit is provided from the PHY layer perspective, generated after generating the CWs. In order to facilitate efficient HARQ and combining, an approach shown in **Fig. 6** shows splitting of data before transmission into several parts.

The first transmission includes the entire data 200 to be transmitted with a full (lowest) code rate. The receiver receives a possibly deteriorated version 201 of the data 200. If the received data 201 can be decoded successfully (e.g. with a sufficient reliability), no further retransmissions are necessary. Since the Data 200 are transmitted with the full code rate, the first transmission may be considered as having a high probability of being decoded successfully.

If, however, the reliability of the data is not considered as sufficient enough, "Part 1" 210 of the data is transmitted, e.g. in response to a NACK received from the receiver or derived in another way (e.g. by absence of a positive acknowledgement, ACK). The "Part 1" is received at the receiver as possibly deteriorated data portion 211. Received portion 211 may thus be combined with the corresponding parts of Data 201. If further retransmission is deemed necessary to achieve the desired reliability, "Part 2" 220 of the data 200 is transmitted and received as data portion 221, possibly deteriorated due to transmission errors that may result from changing channel conditions. Again, combining may be applied to the received parts 201, 211, and/or 221. If the reliability is still not sufficient, "Part 3" 230 of the data may be transmitted and received as data portion 231, which may be further combined with the other portions received so far, namely 201, 211, and/or 221.

If further retransmissions are necessary, in one exemplary implementation, parts 210, 220, and 230 are retransmitted in this order cyclically as respective further retransmissions. In another exemplary implementation, Data 200 and then parts 210, 220, and 230 are retransmitted in this order cyclically as respective further retransmissions. These, however, are merely examples and the order may be different, there may be more or less parts than 3, or the like.

Reliability or success or the decoding may be determined by any manner known from the state of the art. For example, CRC check may be used to check the correctness of the decoding. Alternatively, or in addition, results of the soft decoding and/or demodulation may be used to indicate reliability of the decoding and/or demodulation. Alternatively, or in addition, estimated signal to noise ratio may be used as an indicator of reliability.

It is noted that in this example, the data 200 are separated to Part 1 210, Part 2 220 and Part 3 230. These parts 210, 220, and 230 when concatenated, result in the data 200. Parts 1-3 are non-overlapping. However; the first transmission does not include merely one of the parts forming the data 200, but the entire data 200 in this example.

According to an embodiment, a method is provided for transmitting data over a wireless interface. The method comprises obtaining a data unit and splitting said data unit into a plurality of parts. In an exemplary implementation, the data unit may correspond to the data 200 or Fig. 6 and the parts may correspond to parts 1-3 (210, 220, 230) of Fig. 6. Then, the method further comprises transmission processing of each of the plurality of parts which include a first part. The transmission processing includes:
- first segmenting (or forming) of said first part out of the plurality of parts into an integer number of Medium Access Control, MAC, protocol data units, MPDUs. The integer number may be 1 or more.
- second segmenting the integer number of MPDUs into an integer number of forward error correction, FEC, units. FEC units are units to which FEC code is applied.
- encoding, with a FEC coding, each of said integer number of FEC units into one or more codewords.

The method further comprises a step of transmitting the codewords and, upon receiving a negative acknowledgement indication for said first part according to an ARQ, retransmitting said first part including said transmission processing. The present disclosure is not limited to HARQ protocols that send both positive and negative acknowledgements explicitly for each received data or data part. For example, a NACK indication can be conveyed by a positive ACK, e.g. by way of not confirming positively certain parts. Alternatively, a negative acknowledgment indication can be conveyed by a positive ACK.

The sizes of parts, MPDU, and CW may be predefined (e.g. in standard, and may be fixed). This would help avoiding additional signaling.

Fig. 7 is a block diagram that illustrates an aligned splitting approach that may be performed e.g. at the BS side, and how the CWs are generated. A scheduler 310 schedules a data unit for transmission. This results in data 320 of user 1 (currently scheduled user) which is then passed to a splitter 330. There, the data is aligned and split into three parts. Each part has its CWs and MPDUs based on both MAC and PHY layers, respectively.

The splitting 330 is performed in an upper layer (layer above physical layer). For the split parts (part 1 to part 3 in Fig. 7 corresponding to parts 210 to 230 of Fig. 6 respectively), the MPDUs and the CWs have may be created sequentially. This means that the MPDUs and CWs are created based on each part (210 to 230) separately, instead of generating those MPDUs and CWs for the whole data 200. By doing so, the misalignment problem may be solved, and retransmission process may be facilitated.

In an exemplary implementation, the second segmenting is performed in MAC layer and the FEC encoding is performed in physical layer. With such segmentation, the boundaries between MPDUs and CWs are aligned. For example, said splitting (of a data unit into parts) is performed in a layer, which is above the MAC layer, or which is the MAC layer. The first segmenting may be performed in the MAC layer or higher. However, the present disclosure is not limited to the second segmentation performed in MAC layer. It is conceivable to perform the first and/or second segmentation in a layer above the MAC layer.

The splitting and first/second segmenting are aligned, which means that each part 210, 220, 230 resulting from splitting is further segmented independently of the other parts and a combination of them constitutes the data unit 200. An advantage of such aligned splitting and segmenting is keeping the boundaries of the parts unmixed, in other words, it preserves the boundaries so that misalignment problems between the MAC and PHY layers may be avoided.

In an exemplary implementation, the ARQ protocol (retransmissions) is performed in the MAC layer. However, the present disclosure is not limited to this and, with the above mentioned alignment, it is conceivable to perform the retransmission in physical layer or in a layer higher than MAC.

In Fig. 7, the parts 210 to 230 are provided to the channel encoder 340 which may perform the first and second (or only second) segmentation resulting in codewords. Each part of data can be used to apply either a specific channel encoder or one type of channel encoder types such as Polar codes, convolutional codes, Reed Solomon codes, LDPC codes, etc. A combiner 350 may be (but is not necessarily) a part of the transmission chain. The combiner 350 combines the codewords before transmission, which may be done by concatenation or by another reversible operation such as interleaving or the like. As can be seen in Fig. 7, the result of the processing 310-350 is a data unit 200 split into three parts, each of which is individually further segmented into MAC PDU(s) and FEC CWs, thereby providing alignment. The codewords may be further processed and are then transmitted over a wireless channel 390.

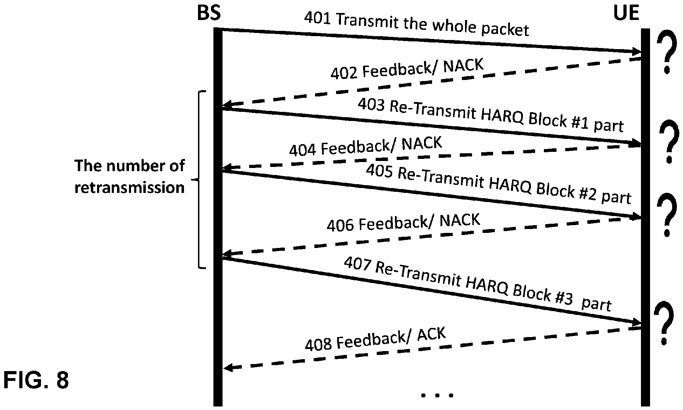

**Fig. 8** illustrates an exemplary retransmission approach utilizing the splitting and segmentation as described above. An initial packet (data unit 200) is sent in step 401, e.g. from the BS to the UE. The UE receives signal carrying the initial packet and checks whether said initial packet can be decoded with a sufficient reliability. This can be done, for instance, based on the FEC check and a system requirement's reliability level. For example, the system requirement may be defined in terms of an error rate (e.g. bit error rate or symbol error rate or frame error rate or the like). At the receiver, the current error rate is determined after decoding and compared to the requirement. It the current error rate is lower than the requirement, an ACK is indicated. It the current error rate is not lower than the requirement, a NACK is indicated. The indication does not necessarily mean explicit signaling, but rather a general indication complying with the employed (H)ARQ protocol.

However, the present disclosure is not limited to such an approach and an additional parity check such as cyclic redundancy check code may be used instead or in addition to checking the reliability of FEC decoding. In case additional parity bits are used, they may be added to the data of the HARQ unit, e.g. MPDU in case the HARQ is performed on MAC.

The UE either accepts the initial packet (in case it is determined to be successfully decoded) or saves it in the buffer for combining with further retransmissions. In case of acceptance of the initial packet, the UE sends a positive acknowledgment (ACK) to the BS. This indicates that the initial packet was received successfully. On the other hand, in case of saving the packet, the UE provides feedback to the BS in form of a negative acknowledgment (NACK) 402. NACK indicates or implies request for retransmission of the (initial) packet 200. In response, as a first retransmission, the BS transmits a first HARQ block 210, which corresponds to the first part of the pre-planned (predefined) data splitting. The retransmission 403 will take place after the BS receives the NACK 402.

If still (at the UE side), the received data is in error, the UE requests in step 404 a second retransmission by sending another negative feedback (NACK) to the BS. Whether or not the received data is in error may be determined only based on checking the retransmitted first data part 210 or it may be determined based on combined initial packet 200 and the first data part 210. In case of receiving a NACK in step 404, the BS sends a second HARQ block 220, which is the second part of the pre-planned data splitting, to the UE in step 405. If on the other hand, the UE determines that the received data is correct (sufficient to successfully decode the data unit 200), the UE may send to the BS and ACK. As in case of the initial packet transmission and the first retransmission, the UE detects the success in decoding based on the FEC and/or based on additional parity check.

The UE examines the second retransmissions (e.g. the FEC bits). If the error is still unacceptable, it will transmit a NACK 406 to the BS, otherwise an ACK will be sent to the UE. Upon receiving a NACK 406, the BS will transmits 407 a third HARQ block data 230, which is the third part of the pre-planned data splitting. In the example of Fig. 8, in step 408 a positive ACK is transmitted 408 from the UE to BS, indicating that decoding could be performed successfully. However, the present disclosure is not limited thereto.

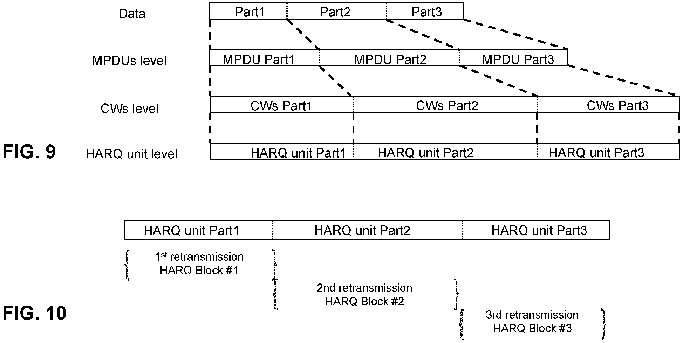

Fig. 9 illustrates this procedure by dividing the data into several HARQ blocks aligned with the splitting that has been done in the upper layer, each of which contains its CWs and MPDUs. In particular, the first row illustrates a level at which the data unit 200 is divided into a plurality of parts. Although there are three parts part 1 to part 3 shown in Fig. 9, the present disclosure is not limited to this amount and the number of parts may be two or may be four or larger than four. Each of the parts becomes in this example an MPDU, thus resulting in respective MPDU Part 1 to MPDU Part 3. As mentioned above, there may be one or more MPDUs per part. In other words, MPDU may be segmented into one or more MPDUs. In the example of Fig. 9 an MPDU Part x is formed by adding to the Part x a header and/or padding and/or another kind of signaling or redundancy or the like (x in this example is 1 to the number of parts to which the data unit is split). Furthermore, each MPDU Part x is then segmented into one or more FEC units that are encoded, resulting in respective codewords CWs. In Fig. 9 codewords that result from segmenting MPDU Part x are referred to as CWs Part x. As illustrated in Fig. 9, the HARQ units correspond to the respective parts, meaning that the retransmissions of the data unit are performed in a plurality of redundancy versions, which correspond to coded parts. The CWs may be associated with the respective HARQ units that may be identified by a specific number or ID. The ID may then used to perform the retransmissions.

This is further illustrated in Fig. 10. In particular, Fig. 10 shows an HARQ unit corresponding to the entire data unit consisting, in this example, of HARQ units Part 1 to 3. The HARQ units Part 1 to 3 form three respective redundancy versions. For example, initial transmission transmits the entire data unit, the first retransmission transmits HARQ unit Part1, the second retransmission transmits HARQ unit Part2, the third retransmission transmits HARQ unit Part3, the fourth retransmission transmits HARQ unit Part1, etc. Thus, the three redundancy versions may be cyclically transmitted until the maximum number of retransmissions is reached or the reception was successful, whichever occurs earlier. It is noted that this is only an exemplary implementation and the present disclosure is not limited to such an ordering or number of redundancy versions. For instance, the entire data unit 200 that is initially transmitted may also be a redundancy version and may be a part of the redundancy version cycle. It is noted that Parts 1 to 3 and the corresponding MPDUs do not necessarily have the same size and are not necessarily segmented into the same number of codewords, also such approach may facilitate a simple implementation.

The present disclosure is not limited to any particular ARQ or HARQ protocol. In Fig. 8, a stop-and-wait approach is illustrated in which upon a reception of a NACK, the next of a predefined order of redundancy versions is transmitted.

However, it is conceivable to provide an ARQ protocol in which the negative acknowledgement includes an identification of those one or more part among the plurality of parts which were not received successfully and/or a positive acknowledgement includes an identification of those one or more parts among the plurality of parts which were received successfully. With such identification, a delay of a successful reception may be reduced. In particular, if, after the initial transmission of the entire data unit 200, the third part 230 was not received successfully, but the first and the second parts 210 and 220 were received successfully, a NACK with an identification of a HARQ unit corresponding to Part 3 may be fed back to the transmitter. Instead of first transmitting the first and the second parts 210 and 230 as would be the predefined order, the transmitter directly transmits the third part 230.

For example, negative acknowledgement and/or said positive acknowledgement is a block acknowledgement for all parts of said plurality of parts. In the example of Fig. 10 in which there are three parts per data unit, the block acknowledgement may have three bits b1 b2 b3. Each bit indicates for the respective part, whether the part was received successfully. For instance, if parts 1 and 2 were received successfully, but not part 2, b1-b3 may have the values 0 0 1. Here, 0 indicates a successful transmission and 1 indicates a request for retransmission. However, the signaling may be vice versa - 1 may indicate successful and 0 unsuccessful transmission.

In summary, at the BS side in an example, several characteristics are considered. Firstly, in the above described frame structure, the PHY (physical layer) receives a split version of the PSDU from the MAC layer where it is aligned and the PHY layer. In this case, the physical layer will be aware of the MPDU boundaries, their length, delimiters, etc. Secondly, the FEC (CWs generation) operates on blocks of information bits (which are the split PSDUs), taking into consideration the MPDU boundaries of each part that was splitted as described above. Thirdly, a block ACK (BA) indicates which HARQ unit numbers were decoded correctly, so the retransmission occurs only for incorrectly decoded HARQ units.

Fig. 9 shows the aligned splitting which may be a splitting between the PHY and MAC layers and how the aligned splitting approach has been done based on the split data. Fig. 10 shows how much the proposed approach is facilitating the retransmission approach by introducing the HARQ unit that has boundaries aligned on multiple layers. The HARQ unit contains the data that is not mixed in the boundaries from two layers (MAC and PHY layers) and this unit will be used to perform the retransmission procedure where the first retransmission belongs to HARQ unit number 1, the second retransmission belongs to the HARQ unit number 2, and the third retransmission belongs to the HARQ unit number 3. Note that here, the number of HARQ units depends on the number of split data at the BS.

As a consequence of the defined mapping between the data unit and the parts of the data unit onto the MAC and PHY units, a retransmission of a failed MPDUs will not include different coded bits. This is achieved by processing the parts of the data unit that are basis for redundancy versions separately and by using the same predefined FEC approach on the same data irrespectively of the current (re)transmission status. This further facilitates application of combining of different copies and/or redundancy versions of the data unit positions at the receiver (e.g. UE).

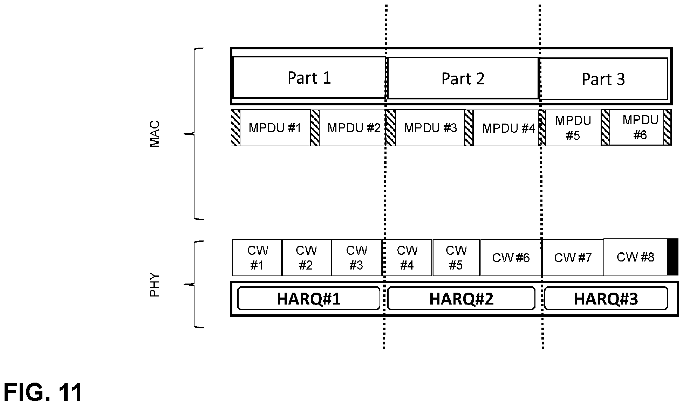

In the following, a detailed example is provided. Fig. 11 shows an exemplary segmentation with aligned unit boundaries on multiple layers. In this example, a UE has data to be transmitted and this data has been split at the upper layers or MAC layer into three parts. The MAC and PHY layers of the OSI model (or more specifically of a wireless network such as a WLAN) are illustrated in Fig. 7. In particular, Fig. 7 shows MAC layer obtaining (from a higher layer or by segmenting in MAC layer a data unit providing from a higher layer) Part 1 to Part 3 of the data unit.

Each Part of the data unit is then separately segmented into two MPDUs: Part 1 is segmented into MPDU#1 and MPDU#2, Part 2 is segmented into MPDU#3 and MPDU#4, and Part 3 is segmented into MPDU#5 and MPDU#4. As can be see in the figure, an MPDU may comprise a header and/or padding or the like. The MPDUs are the passed to the physical layer (PHY). In the PHY, the MPDUs belonging to the same part are FEC encoded. This may be performed by segmenting the MPDUs of the same part (which corresponds to SDUs of the PHY, i.e. to PSDUs) into FEC units which are then separately FEC encoded into codewords CWs. In this example, MPDU#1 and MPDU#2 are segmented into three FEC units (not shown in Fig. 11) which are then respectively coded into three codewords CW#1, CW#2, and CW#3. Moreover, MPDU#3 and MPDU#4 belonging to Part 2 are segmented into three FEC units which are then respectively coded into three codewords CW#4, CW#5, and CW#6. Similarly, MPDU#5 and MPDU#6 belonging to Part 3 are segmented into three FEC units which are then respectively coded into three codewords CW#7, CW#8, and CW#9.

With the present splitting, the HARQ unit (unit that is retransmitted upon feedback) may correspond in any layer among a plurality of layers to an integer multiple of the layer's units as shown in Fig. 11. With this approach, the HARQ unit (HARQ#1, HARQ#2, HARQ#3) may be on physical layer or in MAC layer, or even on a higher layer (in case splitting is performed on the higher layer).

In Wi-Fi standards, a HARQ unit is the part that is signaled and retransmitted. In Fig. 11, HARQ can be managed by PHY or MAC. Since the boundaries of the split data are aligned in MAC and PHY layers, the misalignment problem between the MPDUs and CWs does not occur. For example, if an error occurs in HARQ#1, HARQ#1 corresponds to Part 1 and includes an integer number of CWs (3) Part 1, and an integer number of MPDUs (2). In other words, all layers starting from the data layer until the PHY layer within the same boundary (Part boundary) represent the same data. As long as the HARQ unit correspond to a Part or its multiples, the HARQ (and combining) may be performed in any layer.

For example, if a UE (STA) has sufficient memory at its disposal, buffering and combining CWs that pertain to one HARQ unit (e.g. one Part) is possible. Thus, it is possible to perform HARQ also on physical layer (with a HARQ unit being multiple of CWs). If a UE does not have sufficient memory, it can buffer the MPDUs, and perform HARQ / combining on MPDU level. If a UE has what is e.g. only a minimum requirement for memory, The UE can buffer the split data (Parts) and perform HARQ / combing on that level. The layer of HARQ and/or of the combining may be configurable based on UE capabilities. For example, it may be negotiated before the actual data transmission between the UE and the BS (or between the STA and an AP, or in general between the communicating devices).

However, it is noted that the approaches presented herein are not necessarily adaptive, One of the presented HARQ levels may be used in a system without possibility of selecting another.

In the present disclosure, a splitted part is represented by a known integer number of HARQ units, CWs, and MPDUs. Since the boundaries are preserved by splitting the data as described above and keeping this splitting aligned in the lower layers, HARQ can be performed in any layer without changing the remaining processing stack design.

It has that flexibility. However, doing it from the MAC layer will save the buffer size from being large. But it can be at the PHY as well. So, it depends on the application and the memory of the equipment to either save the MPDUs or the HARQ units.

As can be seen in Fig. 11, in some embodiments, a splitted part (such as Part 1) corresponds to an integer number of CWs, and to an integer number of MPDUs. However, an MPDU does not necessarily correspond to an integer number of CWs. For example, CW#2 belongs to two different MPDUs. As long as the HARQ is performed for a HARQ unit which represents (on any layer) the splitted Part (e.g. Part 1), Knowing of the boundaries of CWs within the HARQ units are not necessary for doing the retransmission. For example, if the error happened in CW#2, the receiver will ask for retransmission of the whole HARQ#1 (e.g. from the PHY layer) that represents the whole part 1 (i.e., from the MAC layer). The aligned boundaries between MAC and PHY layers alongside the splitting then enable combining on any layer depending on capabilities of the UE. It is noted that the HARQ#1, HARQ#2, and HARQ#3 are illustrated below the CWs in Fig. 11. However, this does not mean that the actual layer of retransmission protocol must be physical layer below CWs. As mentioned, the retransmission protocol may operate on higher layers. However, at any layer, the HARQ unit keeps the boundaries aligned with the lower layers and the splitted parts. Moreover, combining is possible on physical layer in any case. On the other hand, combining may be also performed on higher layers, e.g. depending on UE capabilities.

As in the current WiFi systems, MPDU retransmission may be advantageous for some communication systems because it is simpler and requires less amendments of current standard design and less memory. In other words, MAC layer retransmissions may be beneficial for some applications.

It is noted that this arrangement is only exemplary. In some examples, each MPDU may be segmented into an integer number of CWs independently of other MPDUs.

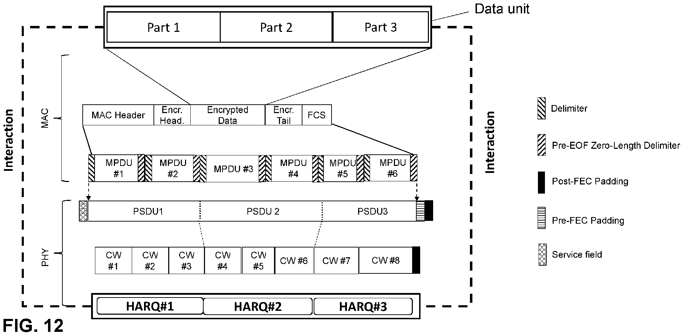

The frame structure of the WiFi network (MAC and PHY) in the context of the present disclosure related to the aligned splitting approach is shown in Fig. 12. As can be seen in Fig. 12, the data unit (containing Parts 1-3) is processed in the MAC layer that may include addition of a MAC header and possibly further control fields such as the encryption related information and the like mentioned above with reference to Fig.4. Such MAC packet may then be segmented into one or more MPDUs (MPDU#1 to MPDU#6 as is also shown in Fig. 11).

Then, (an integer number of) MPDUs of the same Part are concatenated to form a PSDU. In particular, MPDU#1 and MPDU#2 form PSDU1, MPDU#3 and MPDU#4 form PSDU2, and MPDU#5 and MPDU#6 form PSDU3. PSDUs 1 to 3 are then separately and independently from each other encoded by FEC as already described with reference to Fig. 11. In the following, performing the retransmissions is described in more detail. The "interaction" shown in Fig. 12 can be represented as a cross-layer design between the MAC and the PHY in a way that keeps the boundaries saved to be able to combine correctly.

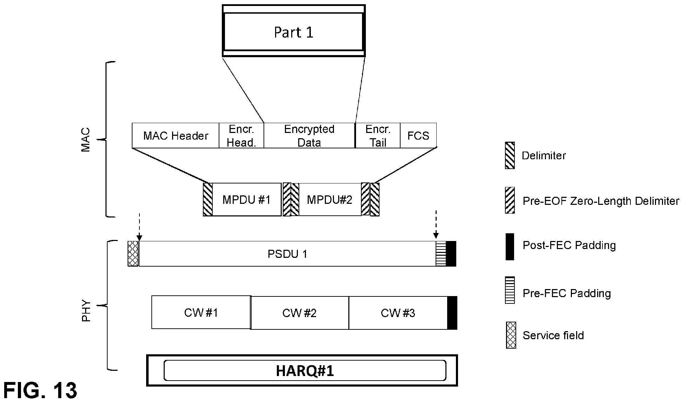

When the UE requests a retransmission, the BS sends the parts that is corresponding to the HARQ #1. If the reliability is still unacceptable, the UE asks for a second retransmission. So, the BS sends the parts that are corresponding to HARQ #2. Then, if the error is not corrected yet, the UE asks for third retransmission. Therefore, the BS sends the parts that are corresponding to HARQ #3. The frame structure for those steps is represented in the following Figs. 13, 14, and 15, respectively, at the BS side.

Fig. 13 shows an example of the frame structure of the first retransmission at the BS side. Part 1 is the first retransmission version and it is segmented into two MPDUs, namely MPDU#1 and MPDU#2. The two MPDUs are then provided to the physical layer, forming there the PSDU1. The PSDU1 is then segmented into FEC units that are separately encoded into respective codewords CW#1-CW#3.

Fig. 12 represented the sending of the whole data unit (including Parts 1-3) to a user. If the error is detected on the user side, the user will ask for retransmission. To do the retransmission based on the feedback, if the error is in HARQ#1, the BS resends Part 1 represented in Figure 13. Since the data (i.e., Part 1) is the same as in Fig. 12, throughout MPDUs, PSDUs, and CWs, the combining can be performed the user side - the data is aligned with the retransmission. So, between the first transmission and the first retransmission, the MPDU #1 and MPDU#2, the PSDU 1, and the CW#1, 2, and 3 are the same. This means the combination will be done without any misalignment problems.

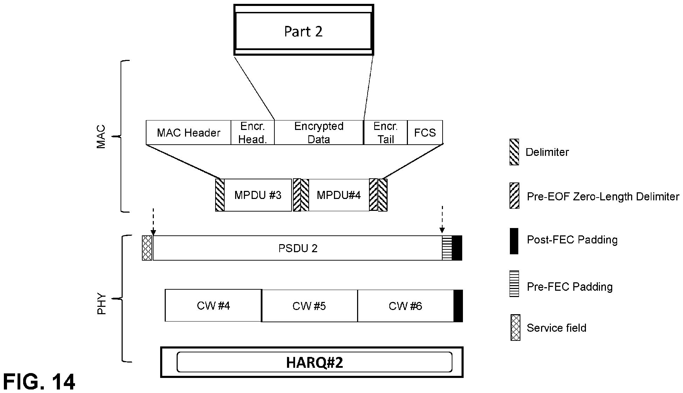

Similarly, Fig. 14 shows an example of the frame structure of the second retransmission at the BS side. Part 2 is the second retransmission version and it is segmented into two MPDUs, namely MPDU#3 and MPDU#4. The two MPDUs are then provided to the physical layer, forming there the PSDU2. The PSDU2 is then segmented into FEC units that are separately encoded into respective codewords CW#4-CW#6. In other words, in Fig. 14, the second part is retransmitted, which is aligned with the second part of the first retransmission. This is because the data is split and this splitting is kept aligned between the MAC and PHY layers.

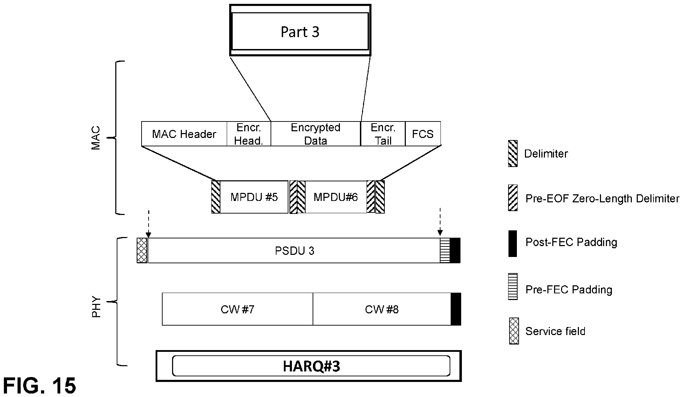

Finally, Fig. 15 shows an example of the frame structure of the second retransmission at the BS side. Part 3 is the third retransmission version and it is segmented into two MPDUs, namely MPDU#5 and MPDU#6. The two MPDUs are then provided to the physical layer, forming there the PSDU3. The PSDU3 is then segmented into FEC units that are separately encoded into respective codewords CW#7-CW#8. As mentioned above, in some exemplary implementations, in case the data unit has not yet been received successfully after the three retransmissions shown in Figs. 13-15, further retransmissions may be performed that cyclically correspond to the three retransmissions.

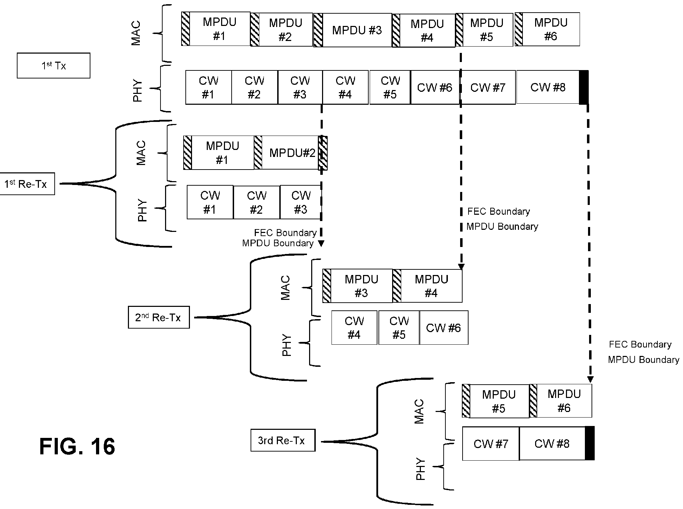

At the UE side (receiver side), combining may be performed smoothly without any misalignment between the CWs and MPDUs. The combining can be performed at any desired layer that we want, so it gives the flexibility to the network and/or UE to do the combining e.g. at MAC or PHY. This is illustrated schematically in Fig. 16.

In particular, Fig. 16 shows a receiver side. In particular, in the combing may be performed on MPDU level, as the MPDUs within the initial transmission and the first to third retransmission are aligned as shown in the MAC layer portion in Fig. 16. As another option, the combining may be performed on physical layer level (e.g. on the level of codewords before decoding), since the codewords corresponding to the respective parts 1-3 in the initial transmission and in the retransmissions are aligned. Fig. 16 also illustrates how misalignment problem is solvable by applying the aligned splitting from the upper layers to the PHY layer. In summary, to perform the retransmission based on the feedback, if an error is in HARQ#1, the BS resends Part 1 with the same CWs and MPDUs with the first transmission. Because the data is aligned (pre-splitter), the first transmission and the first retransmission, the MPDU#1 and MPDU#2, the PSDU 1, and the CW #1, 2, and 3 are the same. This means the combination will be performed without any misalignment problems. Based on the feedback, if an error is in HARQ#2, the BS resends content of Part 2 with the same CWs and MPDUs with the first transmission and so on (for further parts).

In summary, the present disclosure provides an aligned splitting approach where the data is split into several parts at the upper layers and then the MPDUs at the MAC layer and CWs at the PHY layer are generated. After that, the BS is sending the data to the UE. On the receiver side, if the data is not successfully decoded, the UE asks for retransmission as block feedback that indicates the HARQ unit number. The BS resends the intended HARQ block. Then, on the receiver side, combining of the copies from MPDUs and CWs may be performed.

It is noted that while the usage of the proposed approach is exemplarily described for downlink, it may be employed to uplink in addition or alternatively to the downlink.

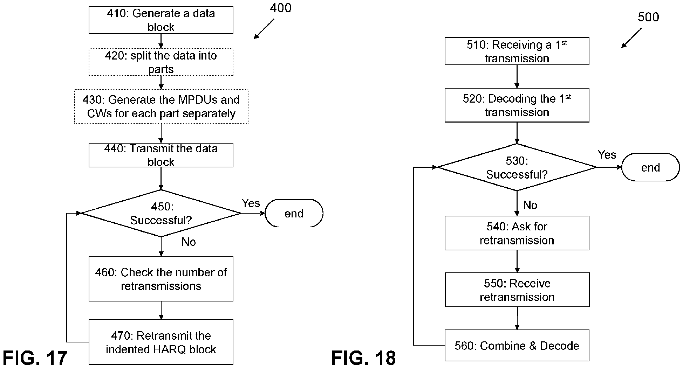

In the following, exemplary methods and apparatuses that implement the approaches explained above are provided. Fig. 17 shows the method 400 for transmitting data as described above. The method includes obtaining a data unit. The data unit may be obtained by generating 410 the data unit (may be referred to as "data block") on the same layer or on a higher layer.

The data unit may comprise any data such as user data (payload) and/or signaling data of the same or higher layer as the layer that performs further steps.

In step 420, the data unit is split 420 into a plurality of parts. Then, for each part separately, a first segmenting of said part into an integer number of MPDUs and a second segmenting the integer number of MPDUs into an integer number of forward error correction, FEC, units is performed in step 430. It is noted that the second segmenting of MPDUs may be performed across MPDU borders in some exemplary implementations. In other words, it may be possible that one FEC unit includes data from more than one MPDUs. This may be efficient in terms of overhead such as padding. However, the present disclosure is not limited thereto and, in general, each of the MPDUs may be further segmented (by the second segmentation) into an integer number of FEC units. The FEC units are then separately encoded into respective codewords and the codewords are transmitted 440.

The transmission 440 is an initial transmission. It is tested 450, at the transmitter side, whether the transmission was successful. If the transmission is successful ("Yes" after step 450), the procedure ends for the present data unit (data block) and it may be repeated for further data units to be transmitted. If the transmission is not successful (upon receiving or deriving a negative acknowledgement indication) for said part according to an automatic repeat request, ARQ, protocol, the part is retransmitted. The retransmission includes a step of checking the number of retransmissions 460 and a step of retransmission 470 according to the results of the check. In particular, in the checking step 460, it is determined which redundancy version is to be sent (according to the predetermined order of retransmissions as mentioned above). In this step, it may be additionally checked, whether or not the maximum number of retransmissions is reached in which case the method ends for the current data unit and, for example, the error in delivery is provided to a higher layer for handling. In step 470, the redundancy version determined in step 460 is transmitted.

It can happen that after one retransmission, the transmission was still not successful (the receiver was not able to successfully decode the transmitted data unit, in particular one or more parts of the data unit). In such case, the retransmission is repeated as is indicated in Fig. 17 by a feedback arrow from step 470 to step 450. It is noted that the acknowledgements sent after the initial transmission (540) may be a block acknowledgement, identifying parts of the data unit that were decoded successfully and parts that have not been decoded successfully. Accordingly, the retransmission for all unsuccessful parts may be performed.

Correspondingly to the transmission method 400, Fig. 18 illustrates an exemplary reception method 500.

The method 500 includes a step of receiving 510 a first transmission and decoding 520 the first transmission. In particular, codewords are received and reception processing of each part is performed. The reception processing includes for each part decoding, with FEC decoding the received codewords into FEC units. Then a second aggregating of the FEC units into MPDUs is performed and a first aggregating of MPDUs into said part is performed. The data unit is obtained by joining the parts. If the reception is successful in step 530 (the decoding is sufficiently reliable), the method ends ("Yes" after step 530). If the reception is not successful ("No" after step 530), retransmission is requested 540. The request for retransmission may be conveyed to the transmitter by way of explicit or implicit negative acknowledgement indication for the unsuccessfully decoded part according to the ARQ protocol. In step 550 the retransmission is received. As mentioned above, combining may be performed on various layers. For example, the combining may be performed before or after the FEC decoding. In Fig. 18, the combining and decoding are performed in step 560.

In an exemplary implementation, the received retransmitted part and the first transmission are combined. The combining may be performed on the physical layer before said decoding. This approach enables exploiting the soft information directly from the channel. After each retransmission, the success of the decoding is tested again which is illustrated in Fig. 18 by the arrow from step 550 to step 530.

In summary, the present disclosure provides a cross-layer design between MAC and PHY layers to address the misalignment issue in Wi-Fi networks by investigating the frame structure aspects. First, a cross-layer design applies the aligned data splitting at the transmitter side in both intended layers (MAC and PHY). On the UE side, the combining mechanism can be performed without any issues. Cross-layer interactions between the MAC and PHY may include passing of information between these layers. Such kind of information may indicate one or more of the following: the number of the split parts per data units, the number of MPDUs for each part, the number of CWs in each MPDU (or PSDU), the length of CWs, the number of punctured/repeated bits, the number of HARQ units, or the like.

The present disclosure provides an approach of the aligned splitting that has an advantage of being simple, requiring no additional memory or the like. Moreover, although multiple redundancy versions are used, there is no need to use a circular buffer.

This aligned splitting is a kind of cross-layer interaction as well it facilitates the features of the network to achieve specific key performance indicators such as reliability. This kind of interaction between the MAC and PHY is the first of its kind in HARQ protocols where it facilitates the retransmission and solves the misalignment problem.

The aligned data splitting at the transmitter side may lower the required number of retransmissions. The number of retransmissions, however, will also be based on the quantity of divided data, giving us the ability to control network latency and throughput.

This can make the HARQ readily applicable in particular for Wi-Fi networks or 3GPP based networks or any other kind or networks.

One of the major hurdles for supporting HARQ in 802.11 is the (mis)alignment of codewords and MPDUs, which calls for a complicated receiver implementation and additional buffers on the transmitter side. In order to address this problem, the present disclosure provides an approach referred to herein as aligned splitting as one of the cross-layer designs between MAC and PHY layers. Aligned splitting approach is a kind of MAC-PHY layer interaction to facilitate the retransmission protocol.

Regarding the FEC code, any FEC code may be used, such as Polar codes, convolutional codes, Reed Solomon codes, LDPC codes, etc.

At the BS side, in the frame structure according to an exemplary implementation, the PHY receives a splitted version of the PSDU from the MAC layer where it is aligned and PHY layer, in this case, will be aware of the MPDU boundaries, their length, delimiters, etc. The FEC (CWs) operates on blocks of information bits (which are the splitted PSDUs), taking into consideration the MPDU boundaries. The physical layer may be aware of the MPDU boundaries as a result of cross-layer information sharing. This sharing may be performed via an interface between the PHY and MAC. Alternatively or in addition, the MAC and PHY may be configured by a signaling protocol to comply with the aligned design.

The Block ACK (BA) may indicate which HARQ unit among HARQ units of the same data unit was/were decoded correctly, so the retransmission occurs only for incorrectly decoded HARQ units.

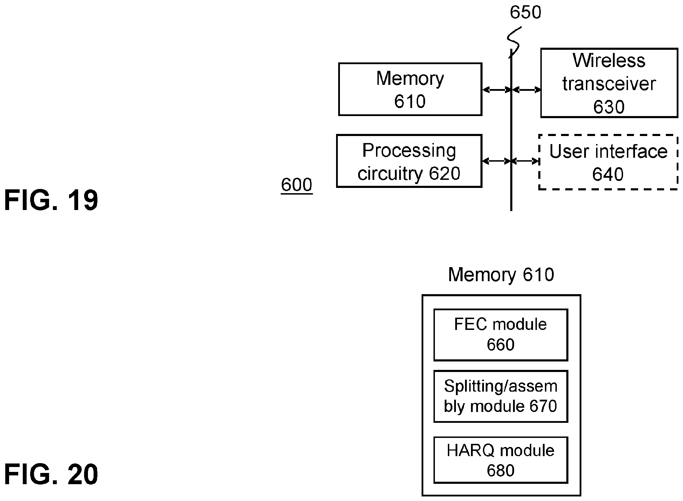

FIG. 19 is a block diagram illustrating functional modules of an exemplary transmitting and/or receiving device 600. The modules comprise a memory 610, processing circuitry 620, wireless transceiver 630, and (possibly / optionally) user interface 640. These modules may be interconnected by a bus or a system of buses 650. The memory 610 may store a computer program which may be loaded into the processing circuitry 620 for execution. The processing circuitry may, controlled by the program, perform steps of any of the above described methods. The memory 610 may physically comprise one or more volatile or non-volatile memory (storage) modules. Apart from the program, it may store further data, such as the data in retransmission buffer or combining buffer or the like.

The processing circuitry 620 may comprise one or more programmable processors. These processors may be general purpose processors or specific processing hardware such as one or more of digital signal processors (DSPs), graphics processors (GPUs), or the like. Alternatively or in addition, it may include programmable hardware such as FPGAs or ASICs or other kind of electronics.

The wireless transceiver 630 may comprise wireless transmitter and/or wireless receiver. A wireless transmitter may comprise a digital to analog converter, upconverter (possibly including a local oscillator), one or more amplification stages, one or more transmitting antenna ports or the like. It may but does not have to include antennas themselves. Antennas may be connected externally. Correspondingly, the wireless receiver may comprise one or more receiving antenna ports, one or more amplification stages, downconversion, analog to digital conversion or the like. It is noted that these components of a transceiver are only exemplary and any of the known transmitter / receiver architectures may be applied. Some components may be shared between receiver and transmitter in case the transceiver 630 includes both.

User interface 640 may include any interface that enables a user to interact with the device 600. For example, it may be a touch screen, a speech recognition module, audio module including a microphone, video module including a camera, a keyboard, some specific keys or buttons or the like. By way of the user interface, the user may initiate a transmission or request a reception of data. However, it is noted that a user interface is not necessary. Especially in loT devices or intelligent sensors or the like, the device 600 may generate, transmit and/or receive the data without user interaction.

FIG. 20 is a block diagram illustrating functional modules of a storage 610 storing a program to be executed on processing circuitry of Fig. 19 to perform methods such as those of Figs. 17 and 18. In particular, the memory 610 of a transmitting device may store a splitting module 670 configured to obtain a data unit; split said data unit into a plurality of parts; and - for each part - perform first segmenting of said first part out of the plurality of parts into an integer number of MPDUs; and perform second segmenting each of the integer number of MPDUs into an integer number of FEC units. A FEC module 660 is configured to encode, with a FEC coding, each of said integer number of FEC units into one or more codewords. The HARQ module 680 is configured to, upon receiving a negative acknowledgement indication from said transceiver 630, retransmit the requested part according to the HARQ.

A receiving device may have the same physical structure 600 as the transmitting device. Its memory 610 may comprise the corresponding modules. In particular the FEC module 660 may receive codewords from the transceiver 630, and perform FEC decoding of the codewords into an integer number of FEC units. An assembly module 670 performs a second aggregating of the integer number of FEC units into MPDUs, and a first aggregating of said integer number of MPDUs into the current part data unit. It further forms a data unit by joining the plurality of parts at the first transmission or upon correct reception of all parts. The HARQ module 680 performs the transmitter-side HARQ. For example, after transmitting a negative acknowledgement indication, by said transceiver 630, for the current part according to the HARQ protocol, receives retransmission of said part as described above.

In summary, in the present disclosure, an approach to create RVs for an IR-HARQ protocol where the misalignment is avoided and a new MAC-PHY cross-layer design interaction is presented. The HARQ technique is inspired by rate splitting. The receiver side may simply combine the data according to the MPDU and CW levels and thereby increases the networks' data throughput. Provided is splitting of the data with alignments between the MAC and PHY layers in a way that somewhat differs from chase combining and from incremental redundancy. In particular, pre-planned and pre-generated RVs are provided that are used for the retransmissions.

### Implementations in software and hardware

It is noted that although embodiments and examples of the present disclosure were provided in terms of a method above, the corresponding devices providing the functionality described by the methods are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The above examples are not to limit the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

According to a first aspect, a method is provided for transmitting data over a wireless interface, the method comprising: obtaining a data unit; splitting said data unit into a plurality of parts; transmission processing of each of the plurality of parts which include a first part, the transmission processing including: first segmenting of said first part out of the plurality of parts into an integer number of Medium Access Control, MAC, protocol data units, MPDUs, second segmenting each of the integer number of PDUs into an integer number of forward error correction, FEC, units, and encoding, with a FEC coding, each of said integer number of FEC units into one or more codewords; and transmitting the codewords; upon receiving a negative acknowledgement indication for said first part according to an automatic repeat request, ARQ, protocol, retransmitting said first part including said transmission processing.

According to a second aspect, in addition to the fist aspect, the second segmenting is performed in MAC layer and the encoding is performed in physical layer.

According to a third aspect, in addition to the fist or the second aspect, said splitting is performed in a layer, which is above the MAC layer, or which is the MAC layer.

According to a fourth aspect, in addition to any of the first to third aspect, the ARQ protocol is performed in the MAC layer.

According to a fifth aspect, in addition to any of the fist to fourth aspect, in said ARQ protocol the negative acknowledgement includes an identification of those one or more parts among the plurality of parts which were not received successfully and/or a positive acknowledgement includes an identification of those one or more parts among the plurality of parts which were received successfully.

According to a sixth aspect, in addition to the fifth aspect, said negative acknowledgement and/or said positive acknowledgement is a block acknowledgement for all parts of said plurality of parts.

According to a seventh aspect, a method is provided for receiving data over a wireless interface, the method comprising: receiving codewords; reception processing of each of a plurality of parts which include a first part, the transmission processing including: decoding, with a FEC decoding, one or more of the codewords into an integer number of forward error correction, FEC units, a second aggregating of the integer number of FEC units into each of an integer number of Medium Access Control, MAC, protocol data units, MPDUs, and a first aggregating of said integer number of MPDUs into said first part; obtaining a data unit by joining the plurality of parts; after transmitting a negative acknowledgement indication for said first part according to an automatic repeat request, ARQ, protocol, receiving retransmission of said first part including said reception processing.

According to an eighth aspect, in addition to the seventh aspect, the method further comprises a step of combining said received first part and said retransmission of the first part.

According to a ninth aspect, in addition to the seventh or the eighth aspect, the combining is performed on the physical layer before said decoding.

According to a tenth aspect, a program is provided stored in a non-transitory medium and comprising code instructions which, when executed on one or more processors, cause said one or more processors to perform the method according to any of the first to ninth aspect.

According to an eleventh aspect, a transmitting device is provided for transmitting data over a wireless interface, the transmitting device comprising: processing circuitry configured to: obtain a data unit; split said data unit into a plurality of parts; perform transmission processing of each of the plurality of parts which include a first part, the transmission processing including: first segmenting of said first part out of the plurality of parts into an integer number of Medium Access Control, MAC, protocol data units, MPDUs, second segmenting each of the integer number of PDUs into an integer number of forward error correction, FEC, units, and encoding, with a FEC coding, each of said integer number of FEC units into one or more codewords; and a transceiver configured to transmit the codewords and to receive positive or negative acknowledgement indications; wherein the processing circuitry is further configured to, upon receiving a negative acknowledgement indication, by said transceiver, for said first part according to an automatic repeat request, ARQ, protocol, retransmit said first part including said transmission processing.

According to a twelfth aspect, a receiver is provided for receiving data over a wireless interface, the method comprising: a transceiver configured to receive codewords and transmitting positive or negative acknowledgement indications; processing circuitry configured to: perform reception processing of each of a plurality of parts which include a first part, the transmission processing including: decoding, with a FEC decoding, one or more of the codewords into an integer number of forward error correction, FEC units, a second aggregating of the integer number of FEC units into each of an integer number of Medium Access Control, MAC, protocol data units, MPDUs, and a first aggregating of said integer number of MPDUs into said first part; obtain a data unit by joining the plurality of parts; after transmitting a negative acknowledgement indication, by said transceiver, for said first part according to an automatic repeat request, ARQ, protocol, receive retransmission of said first part including said reception processing.

Summarizing, the present disclosure provides methods and apparatuses for receiving and transmitting data over a wireless interface. A data unit is transmitted and/or received split into a plurality of parts. The parts may be used as redundancy versions that are transmitted if retransmission is necessary. In particular, each part is segmented into an integer number of MPDUs and the MPDUs are segmented into FEC units that become codewords after FEC encoding. If the transmission of the entire data unit is not successful, the redundancy versions corresponding to the parts are transmitted in a predefined order. Alternatively, those redundancy versions may be transmitted which were identified as erroneous (not successfully decodable).

In particular, the transmitter (e.g. a base station, BS) delivers the entire data unit, which is divided into various sections (parts) before the transmission, at the upper layer or MAC layer. The receiver (e. g. a UE) asks to retransmit the data if the reliability level is not accepted based on its requirement. The BS retransmits the portions (split sets) one by one based on the feedback (for example block acknowledgement, BA) from the UE receiver. The first transmission and the retransmission thus include the same data and the same MPDUs and CWs, therefore, the issue of misalignment is resolved. With this strategy, it is possible to integrate the data according to both MPDU and CWs levels, then increase the networks' data throughput.

## Claims

1. A method for transmitting data over a wireless interface, the method comprising:
obtaining a data unit;
splitting said data unit into a plurality of parts;
transmission processing of each of the plurality of parts which include a first part, the transmission processing including:
- first segmenting of said first part out of the plurality of parts into an integer number of Medium Access Control, MAC, protocol data units, MPDUs;
- second segmenting the integer number of PDUs into an integer number of forward error correction, FEC, units; and
- encoding, with a FEC coding, each of said integer number of FEC units into one or more codewords, and
transmitting the codewords;
upon receiving a negative acknowledgement indication for said first part according to an automatic repeat request, ARQ, protocol, retransmitting said first part including said transmission processing.

2. The method according to claim 1, wherein the second segmenting is performed in MAC layer and the encoding is performed in physical layer.

3. The method according to claim 1 or 2, wherein said splitting is performed in a layer, which is above the MAC layer, or which is the MAC layer.

4. The method according to any of claims 1 to 3, wherein the ARQ protocol is performed in the MAC layer.

5. The method according to any of claims 1 to 4, wherein in said ARQ protocol
the negative acknowledgement includes an identification of those one or more parts among the plurality of parts which were not received successfully and/or
a positive acknowledgement includes an identification of those one or more parts among the plurality of parts which were received successfully.

6. The method according to claim 5, wherein said negative acknowledgement and/or said positive acknowledgement is a block acknowledgement for all parts of said plurality of parts.

7. A method for receiving data over a wireless interface, the method comprising:
receiving codewords;
reception processing of each of a plurality of parts which include a first part, the transmission processing including:
- decoding, with a FEC decoding, one or more of the codewords into an integer number of forward error correction, FEC units,
- a second aggregating of the integer number of FEC units into an integer number of Medium Access Control, MAC, protocol data units, MPDUs; and
- a first aggregating of said integer number of MPDUs into said first part;
obtaining a data unit by joining the plurality of parts;
after transmitting a negative acknowledgement indication for said first part according to an automatic repeat request, ARQ, protocol, receiving retransmission of said first part including said reception processing.

8. The method for receiving data according to claim 7, further comprising a step of combining said received first part and said retransmission of the first part.

9. The method according to claim 7 or 8, wherein the combining is performed on the physical layer before said decoding.

10. A program stored in a non-transitory medium and comprising code instructions which, when executed on one or more processors, cause said one or more processors to perform the method according to any of claims 1 to 9.

11. A transmitting device for transmitting data over a wireless interface, the transmitting device comprising:
processing circuitry configured to:
obtain a data unit;
split said data unit into a plurality of parts;
perform transmission processing of each of the plurality of parts which include a first part, the transmission processing including:
- first segmenting of said first part out of the plurality of parts into an integer number of Medium Access Control, MAC, protocol data units, MPDUs;
- second segmenting the integer number of PDUs into an integer number of forward error correction, FEC, units; and
- encoding, with a FEC coding, each of said integer number of FEC units into one or more codewords, and
a transceiver configured to transmit the codewords and to receive positive or negative acknowledgement indications;
wherein the processing circuitry is further configured to, upon receiving a negative acknowledgement indication, by said transceiver, for said first part according to an automatic repeat request, ARQ, protocol, retransmit said first part including said transmission processing.

12. Receiver for receiving data over a wireless interface, the method comprising:
a transceiver configured to receive codewords and transmitting positive or negative acknowledgement indications;
processing circuitry configured to:
perform reception processing of each of a plurality of parts which include a first part, the transmission processing including:
- decoding, with a FEC decoding, one or more of the codewords into an integer number of forward error correction, FEC units,
- a second aggregating of the integer number of FEC units into an integer number of Medium Access Control, MAC, protocol data units, MPDUs; and
- a first aggregating of said integer number of MPDUs into said first part;
obtain a data unit by joining the plurality of parts;
after transmitting a negative acknowledgement indication, by said transceiver, for said first part according to an automatic repeat request, ARQ, protocol, receive retransmission of said first part including said reception processing.
